Europäisches Patentamt

European Patent Office

Office européen des brevets

(11) Veröffentlichungsnummer: **0 479 151 A1**

# (12) EUROPÄISCHE PATENTANMELDUNG

(21) Anmeldenummer: **91116535.5**

(22) Anmeldetag: **27.09.91**

(51) Int. Cl.5: **B60N 2/28**

(30) Priorität: **04.10.90 DE 9013833 U**

(43) Veröffentlichungstag der Anmeldung:
**08.04.92 Patentblatt 92/15**

(84) Benannte Vertragsstaaten:
**AT BE CH DE DK ES FR GB GR IT LI LU NL SE**

(71) Anmelder: **Jacobi, Torsten**
**Robert-Bosch-Strasse 23**
**W-8679 Oberkotzau(DE)**

(72) Erfinder: **Jacobi, Torsten**
**Robert-Bosch-Strasse 23**
**W-8679 Oberkotzau(DE)**

(74) Vertreter: **Tergau, Enno, Dipl.-Ing. et al**
**Tergau & Pohl Patentanwälte Hefnersplatz 3**
**Postfach 119347**
**W-8500 Nürnberg 11(DE)**

(54) **Rückhaltesystem für Kindersicherheitssitze in Kraftfahrzeugen.**

(57) Rückhaltesystem für Kinder-Sicherheitssitze (8), wobei der Kinder-Sicherheitssitz (8) mittels eines Zurrgurtes (12) auf der Sitzfläche (5) des Fahrzeugsitzes (1) fixierbar ist. Das Rückhaltesystem ist durch eine Kombination des 3-Punkt-Sicherheitsgurtes (21) und des Zurrgurtes (12) aktiviert. Der Zurrgurt wird vom 3-Punkt-Sicherheitsgurt (21) mit der erforderlichen Zurrspannung beaufschlagt.

FIG.1

Gegenstand der Erfindung ist ein Rückhaltesystem für in Kraftfahrzeugen montierte Kinder-Sicherheitssitze. Derartige Kinder-Sicherheitssitze sind in zahlreichen Ausführungen und Varianten bekannt. Ein derartig bekannter Kinder-Sicherheitssitz wird üblicherweise zur Beförderung eines Kindes auf einem der Sitze des Kraftfahrzeuges fixiert. Diese Fixierung kann dauerhaft sein, der Kinder-Sicherheitssitz verbleibt also unabhängig davon, ob ein Kind befördert wird oder nicht im Fahrzeug, kann aber auch temporär sein, also nur dann im Fahrzeug montiert sein, wenn ein Kind befördert werden muß.

Ein derartiger Kinder-Sicherheitssitz muß im wesentlichen zwei Grundfunktionen erfüllen:

1. Er muß nach anatomischen und ergonomischen Erkenntnissen derart geformt sein, daß eine bequeme Beförderung eines Kindes über einen längeren Zeitraum gewährleistet ist. Zudem muß darauf geachtet werden, daß durch die Form des Kinder-Sicherheitssitzes keine Haltungsschäden am im Wachstum befindlichen Kind auftreten.

2. Bei Unfällen muß der Kinder-Sicherheitssitz die Sicherheit des beförderten Kindes gewährleisten. Hierzu ist es insbesondere erforderlich, daß der Sitz gut befestigt ist und durch einen Aufprall seine Fixierstellung nicht verläßt.

Zudem muß ein zur temporären Montage geeigneter Sitz ein hohes Maß an Gebrauchsfreundlichkeit aufweisen, ohne die hohen an die Sicherheit gestellten Anforderungen zu vernachlässigen.

Die Fixierung des Kinder-Sicherheitssitzes wird daher mit zum Teil aufwendigen Rückhaltesystemen realisiert. Derartige Rückhaltesysteme fixieren einerseits den Kinder-Sicherheitssitz permanent oder demontierbar auf einem der Fahrzeugsitze und verhindern andererseits in einer Unfallsituation ein Verrücken oder eine andersartige Lageänderung des Kinder-Sicherheitssitzes.

Aufgabe der Erfindung ist es, ein neues, verbessertes Rückhaltesystem für Kinder-Sicherheitssitze zu gestalten.

Diese Aufgabe ist durch die im Anspruch 1 genannte Merkmalskombination gelöst. Das Rückhaltesystem weist hierzu einen den Kinder-Sicherheitssitz auf eine Sitzfläche eines Fahrzeuges pressenden Zurrgurt auf, der bei montiertem Kinder-Sicherheitssitz mit dem zum Fahrzeugsitz gehörenden 3-Punkt-Sicherheitsgurt bewegungsmäßig verbunden ist. Diese Kombination der Fixierung des Sicherheitssitzes mit dem Fahrzeug-3-Punkt-Sicherheitsgurt weist eine Reihe von Vorteilen auf. Zur Montage/Demontage des Kinder-Sicherheitssitzes ist der Zurrgurt lediglich mit einem Freiende fest am Fahrzeug fixiert und das zweite Freiende des Zurrgurtes, das Zurrende, ist derart ausgestaltet, daß der Zurrgurt leicht geschlossen bzw. geöffnet werden kann. Der Zurrgurt wird zur Fixierung des Kinder-Sicherheitssitzes einfach über dessen Kindersitzfläche gezogen und mit seinem Zurrende verschlossen. Dabei kreuzt der Zurrgurt den 3-Punkt-Sicherheitsgurt des Fahrzeugs und ist auf diese Weise bewegungsmäßig an den 3-Punkt-Sicherheitsgurt gekoppelt.

Die Koppelung des Zurrgurtes mit dem 3-Punkt-Sicherheitsgurt realisiert eine denkbar einfache Montage bzw. Demontage des Kinder-Sicherheitssitzes bei gleichzeitiger hoher Unfallsicherheit im Montageendzustand des Kinder-Sicherheitssitzes. Zur Montage bzw. Demontage genügt es nämlich, lediglich den Zurrgurt und den 3-Punkt-Sicherheitsgurt zu schließen oder zu öffnen. Im Montageendzustand ist die Unfallsicherheit des Rückhaltesystems insbesondere deshalb besonders hoch, weil beide Sicherheitsgurte den Kinder-Sicherheitssitz einerseits fest und dauerhaft in seiner Position halten, andererseits aber im Falle eines Aufpralles die durch den Aufprall freiwerdenden Kräfte nach Art von Stoßdämpfern aufgrund ihres textilen Material aufnehmen. Vorteilhaft ist zudem, daß die durch den Aufprall freiwerdenden Kräfte sowohl auf den Zurrgurt als auch auf den kinematisch mit ihm verbundenen 3-Punkt-Sicherheitsgurt wirken, also eine relativ große Wirkfläche zur Stoßdämpfung vorhanden ist.

Darüber hinaus ist das Festzurren des Zurrgurtes dadurch denkbar einfach, daß der geschlossene Zurrgurt über den am 3-Punkt-Sicherheitsgurt ohnehin befindlichen Zurrmechanismus zurrbar ist. Der 3-Punkt-Sicherheitsgurt bildet folglich einerseits ein Fixierende für den Zurrgurt und andererseits das Zurrmittel zur Beaufschlagung des Zurrgurtes mit der erforderlichen Zurrspannung. Der Zurrgurt ist folglich mit seinem Freiende fest am Fahrzeug fixiert und mit seinem Zurrende lösbar am 3-Punkt-Sicherheitsgurt fixiert.

Anspruch 2 schildert eine besonders einfache und damit ohne großen technischen Aufwand realisierbare Ausführungsform. Der Zurrgurt greift hierbei in Fahrzeuglängsrichtung verlaufend besonders günstig am Kinder-Sicherheitssitz an, da der Zurrgurt die Kindersitzfläche des Kinder-Sicherheitssitzes einerseits auf die Fahrzeugsitzfläche des Fahrzeugsitzes preßt und andererseits durch seinen diametralen Verlauf über die Kindersitzfläche besonders gut am Kindersitz anliegt. Darüber hinaus ist die Ausgestaltung des Zurrgurtes als lediglich die Sitzflächen beaufschlagendes Obertrum konstruktiv besonders einfach.

Durch die im Anspruch 3 genannte Einformung eines Gurtaufnahmekanals und die in Anspruch 4 vorgeschlagene Durchführung des Zurrgurtes durch diesen Gurtaufnahmekanal wird einerseits der Sitzkomfort des zu befördernden Kindes erhöht, zumal vom Zurrgurt kein Druck auf den Körper des Kindes mehr ausgeübt werden kann, andererseits liegt der Zurrgurt geschützt im Gurtaufnahmekanal ein und kann somit nicht mehr beschädigt werden. Insbesondere verschmutzt der Zurrgurt nicht so schnell und ist nicht den Reibungskräften des auf ihm sitzenden Kindes ausgesetzt. Ferner ist vorteilhaft, daß bei einem Aufprall des Fahrzeuges evtl. freiwerdende Wärme, beispielsweise Reibungswärme, nicht vom Gurt auf das Kind übertragen wird.

Die Ausführung nach den Ansprüchen 3 und 4 gestattet es ferner, den Zurrgurt in seinem Auflagebereich zu verstärken. Besonders vorteilhaft ist ein Zurrgurt aus Perlongewebeband, welcher mit einer aufgeklebten Polyvinylchloridbeschichtung verstärkt ist. Außerdem kann die Sitzschale des Kinder-Sicherheitssitzes auch aus Schaumpolystyrol oder anderen weichen Materialien gefertigt werden, die einen Aufprall ohne Bruch überstehen können.

Besonders vorteilhaft ist eine Gestaltung des Rückhaltesystems nach den Ansprüchen 5 und 6. Der Kinder-Sicherheitssitz wird der Sitzlehne des Fahrzeugsitzes zugewandt montiert, liegt also in seiner Montageendstellung entgegen der Fahrtrichtung auf der Fahrzeugsitzfläche auf. Durch die in Anspruch 6 beschriebene Verwendung eines Zwischenlegekeils zwischen der Unterseite der Kindersitzfläche und der Oberseite der Fahrzeugsitzfläche kann die Neigung des Kinder-Sicherheitssitzes auf ein gewünschtes Maß eingestellt werden. Diese gegen die Fahrtrichtung weisende Montage des Kinder-Sicherheitssitzessteigert in Verbindung mit dem Rückhaltesystem die Unfallsicherheit erheblich. Dies belegen bereits durchgeführte technische Erprobungen. Die Anforderungen der ECE 44-Norm werden hiernach übererfüllt.

In Anspruch 7 ist eine zweiteilige, den Sitzflächenkörper des Fahrzeugsitzes vollständig umschlingende Ausführung des Zurrgurtes beschrieben. Dies hat den Vorteil, daß der Zurrgurt nicht mit seinem Freiende fest mit dem Fahrzeug verbunden werden muß, sondern die Fixierung des Zurrgurtes durch die Umschlingung des Fahrzeugsitzflächenkörpers realisiert ist. Hierdurch kann der Kindersicherheitssitz für beliebig viele Fahrzeug benutzt werden. Die Fahrzeuge müssen für die Verwendung des Kinder-Sicherheitssitzes folglich nicht gesondert gerüstet werden, da sie die neben dem Zurrgurt für die Realisierung des erfindungsmäßigen Rückhaltesystems notwendigen 3-Punkt-Sicherheitsgurte ohnehin aufweisen.

Die den Fahrzeugsitzflächenkörper umschlingende Ausführungsform des Zurrgurtes erfährt durch die in den Ansprüchen 8 bis 11 geschilderten Maßnahmen weitere Gebrauchsvorteile. Die an den beiden Freienden des Untergurtes fixierten Gurtschließen und die an den beiden Freienden des Obergurtes fixierten Schließzungen gewährleisten eine einfache Montierbarkeit bzw. Demontierbarkeit des Zurrgurtes. Die an einem Freiende zusätzlich vorhandene Längenverstellung erlaubt eine schnelle Anpassung des Zurrgurtes auf die verschiedensten Fahrzeugsitztypen.

Besonders vorteilhaft ist eine stufenlose Verstellung nach Anspruch 11, welche als Gurtstrammer des Zurrgurtes wirksam ist. Mittels dieses Gurtstrammer-Längenverstellung-Kombination nach Anspruch 11 ist die Montate auf beliebigen Fahrzeugsitztypen besonders einfach. Der Untergurt wird unter dem Fahrzeugsitz hindurchgezogen und der Obergurt locker über die Fahrzeugsitzfläche gelegt. Nach dem Verrasten beider Gurtschließen-Schließzungenpaare wird der Zurrgurt über der Gurtstrammer einfach strammgezogen. Die Beaufschlagung des Zurrgurtes mit der erforderlichen Zurrkraft erfolt erfindungsgemäß über den dem mit ihm bewegungsmäßig verbundenen 3-Punkt-Sicherheitsgurt.

Die in den Ansprüchen 12 bis 16 geschilderte weitere Ausführungsform des Zurrgurtes als einstückiger Umlaufgurt ist vom konstruktiven Aufbau her besonders einfach. Durch das Vorhandensein lediglich einer Schließzunge und einer Gurtschließe werden weniger mechanische Teile verbaut, was die Anfälligkeit des Rückhaltesystems verringert. Ferner werden auch die Schnittstellen des Rückhaltesystems reduziert. Demgegenüber bleibt der Gebrauchsvorteil der einfachen Montage auf verschiedenen Sitztypen vollständig erhalten. Der Einsatz der in den Ansprüchen 14 bis 16 beschriebenen Rundschlinge erleichtert zudem die Montage des Rückhaltesystems. Hierbei wird der Kinder-Sicherheitssitz zunächst mittels des einstückigen Umlaufgurtes auf der Fahrzeugsitzfläche fixiert und über die als Gurtstrammer wirksame stufenlose Längenverstellung vorgespannt. Erst danach wird der als Umlaufgurt ausgeführte Zurrgurt mit der Zurrspannung dadurch beaufschlagt, daß der 3-Punkt-Sicherheitsgurt durch die Rundschlinge geführt mit seiner Schließzunge in seinem Gurtschloß einrastet. Durch das Strammziehen des 3-Punkt-Sicherheitsgurtes wird der Umlaufgurt über die Rundschlinge mit der erforderlichen Zurrspannung beaufschlagt.

Anspruch 17 schlägt eine günstige, zweiteilige Ausführungsform des Kinder-Sicherheitssitzes vor. Anstelle des Einlegekeiles ist ein Aufnahmebett für die Sitzschale vorhanden, in welchem die Sitzschale frei schwenkbar und somit vorteilhaft neigungsverstellbar ist.

Anhand der in den Zeichnungen dargestellten Ausführungsformen wird das Rückhaltesystem mit weiteren erfindungswesentlichen Merkmalen ausführlich beschrieben. Es zeigen:

Fig. 1 eine Seitenansicht gesehen von der rechten Fahrzeugseite aus eines Fahrzeugsitzes mit entgegen der Fahrtrichtung montiertem Kinder-Sicherheitssitz und einem mit dem Kinder-Sicherheitssitz verbundenen Rückhaltesystem mit einem als Obertrum ausgeführten Zurrgurt,

Fig. 2 eine Seitenansicht gemäß Fig. 1 mit einem Rückhaltesystem, welches einen den Sitzflächenkörper umschlingenden Zurrgurt aufweist,

Fig. 3 eine Seitenansicht gemäß Fig. 2, wobei das Rückhaltesystem einen einstückigen Umlaufgurt aufweist.

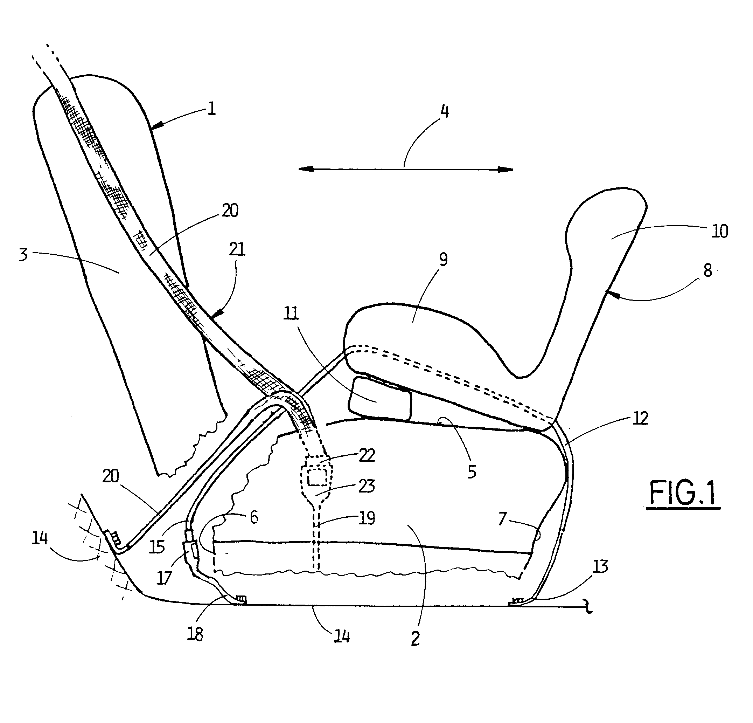

Fig 1 zeigt einen Fahrzeugsitz 1, welcher aus den beiden Baugruppen Fahrzeugsitzflächenkörper 2 und Fahrzeugsitzrückenlehne 3 besteht. Der Fahrzeugsitz 1 ist in Längsrichtung 4 verschiebbar auf einer in den Zeichnungen nicht dargestellten Sitzschiene angeordnet. Der Fahrzeugsitzflächenkörper 2 weist auf seiner Oberseite die Fahrzeugsitzfläche 5, die an die Fahrzeugsitzrückenlehne 3 grenzende Sitzflächenhinterkante 6 und die der Sitzflächenhinterkante 6 in Längsrichtung 4 abgewandte Sitzflächenvorderkante 7 auf.

Auf der Fahrzeugsitzfläche 5 ist der Kinder-Sicherheitssitz 8 montiert. Der Kinder-Sicherheitssitz 8 weist seinerseits die Kindersitzfläche 9 und die Kindersitzrückenlehne 10 auf. Die Kindersitzrückenlehne 10 steht etwa rechtwinklig aus der Kindersitzfläche 9 hervor und liegt der Fahrzeugsitzrückenlehne 3 in Längsrichtung 4 derart gegenüber, daß ein im Kinder-Sicherheitssitz 8 sitzendes Kind gegen die Fahrzeugsitzrückenlehne 3 blickt. Zwischen der Fahrzeugsitzfläche 5 und der Unterseite der Kindersitzfläche 9 ist der Zwischenlegekeil 11 eingeschoben. Durch Verschieben des Zwischenlegekeils 11 in Längsrichtung 4 ist die Neigung der Kindersitzfläche 9 gegenüber der Fahrzeugsitzfläche 5 verstellbar.

Der Zurrgurt 12 ist mit seinem Freiende 13 im Bereich der Sitzflächenvorderkante 7 an dem in den Zeichnungen schematisch dargestellten Fahrzeugboden 14 mittels einer Befestigungsschraube dauerhaft fixiert. Der Zurrgurt 12 verläuft von seinem Freiende 13 die Sitzflächenvorderkante 7 flankierend in den in den Zeichnungen nicht dargestellten, in den Kinder-Sicherheitssitz 8 eingeformten Gurtaufnahmekanal. Den Gurtaufnahmekanal durchsetzt der Zurrgurt 12 im wesentlichen in Längsrichtung 4. Zwischen der Fahrzeugsitz-Rückenlehne 3 und der Sitzflächenhinterkante 6 hindurchgeführt ist der Zurrgurt mit einer an seinem Zurrende 15 montierten Schließzunge 16 mit einer Gurtschließe 17 verrastet. Die Gurtschließe 17 ist fest mit einer Befestigungslasche 18 verbunden, die ebenso wie das Freiende 13 an den Fahrzeugboden 14 angeschraubt ist.

Der aus einer Gurtpeitsche 19 und einem kombinierten Schulter- und Beckengurt 20 bestehende 3-Punkt-Sicherheitsgurt ist fest mit dem Fahrzeug verbunden. Der Zurrgurt 12 kreuzt den Schulter- und Beckengurt 20 derart, daß er in seiner Montageendstellung zwischen der Fahrzeugsitzrückenlehne 3 und dem Schulter- und Beckengurt 20 gezurrt einliegt. Der Schulter- und Beckengurt 20 ist hierbei mit seiner Schloßzunge 22 fest lösbar mit der Gurtpeitsche 19 verbunden. Die Gurtpeitsche 19 trägt hierzu das Gurtschloß 23.

Die Wirkungsweise des Rückhaltesystems ist hierbei folgende:

Der Kinder-Sicherheitssitz 8 wird zunächst locker mittels des Zurrgurtes 12 auf der Fahrzeugsitzfläche 5 fixiert. Die am Zurrende 15 des Zurrgurtes 12 angebrachte Schließzunge 16 ist hierbei mit der Gurtschließe 17 verrastet. Der den Zurrgurt 12 hintergreifende Schulter- und Beckengurt 20 ist über seine Schloßzunge 22 mit dem Gurtschloß 23 verrastet. Über einen in den Zeichnungen nicht dargestellten Aufroll- und Spannmechanismus ist der 3-Punkt-Sicherheitsgurt derart spannbar, daß er durch seine Kreuzlage mit dem Zurrgurt 12 diesen mit der notwendigen Zurrspannung beaufschlagt. Der Kindersicherheitssitz 8 liegt so fest verzurrt und verrutschsicher auf der Sitzfläche 5 auf.

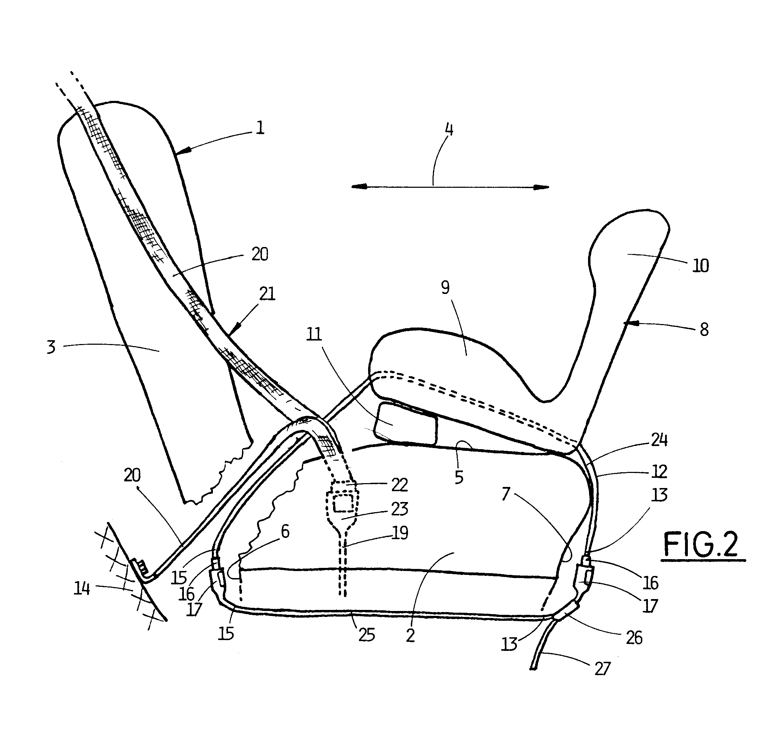

Fig. 2 zeigt ein Rückhaltesystem mit einer gegenüber der in Fig. 1 dargestellten Ausführungsform abgewandelten Variante des Zurrgurtes 12. Der Zurrgurt 12 ist hierbei zweiteilig ausgeführt und besteht aus einem Obergurt 24 und einem Untergurt 25. Der Obergurt 24 liegt genauso wie der Zurrgurt 12 in dem unter Fig. 1 geschilderten Ausführungsbeispiel am Fahrzeugsitzflächenkörper 2 an. Der Untergurt 25 ist demgegenüber unter dem Fahrzeugsitzflächenkörper 2 hindurchgezogen. An seinem Freiende 13 weist der Obergurt eine Schließzunge 16 auf. Das Freiende 13 des Untergurtes ist mit einer Gurtschließe 17 fest verbunden. Die Schließzunge 16 ist in die Gurtschließe 17 eingerastet, wobei dieses Schließzungen-Gurtschließenpaar im Bereich der Sitzflächenvorderkante 7 positioniert ist. Entsprechend dem Freiende 13 weist auch das Zurrende 15 des Obergurtes 24 die angeformte Schließzunge 16 auf, während das Zurrende 15 des Untergurtes die Gutschließe 17 trägt. Auch diese zurrendenseitige Schließzunge 16 des Obergurtes 24 ist mit der zurrseitigen Gurtschließe 17 des Untergurtes 25 fest verrastet.

Der so aus dem Obergurt 24 und dem Untergurt 25 gebildete Zurrgurt 12 umschließt somit den gesamten Fahrzeugsitzflächenkörper 2 in Längsrichtung 4.

Die Montage des Kinder-Sicherheitssitzes 8 ist hierbei denkbar einfach. Der Obergurt 24 liegt bereits vormontiert in dem in den Zeichnungen nicht dargestellten Gurtaufnahmekanal ein. Der Kinder-Sicherheitssitz 8 wird einfach auf die Sitzfläche 5 unter Zwischenlage des Zwischenlegekanals 11 gestellt. Der Untergurt 25 wird unter dem Fahrzeugsitzflächenkörper 2 in Längsrichtung 4 hindurchgezogen und über die beiden Schließzungen-Gurtschließenpaare 16,17 mit dem Obergurt 24 verrastet. Eine über ein Umlenkblech realisierte stufenlose Längenverstellung 26 des Untergurtes 25 erlaubt die Anpassung der Gesamtlänge des Zurrgurtes 12 an jedwede Größe des Fahrzeugsitzflächenkörpers 2. Der Zurrgurt 12 kann durch einfaches Ziehen am Spannstropp 27 über die Längenverstellung 26 straffgezogen werden. Die Längenverstellung 26 wirkt also wie ein Gurtstrammer. Die Beaufschlagung des Zurrgurtes 12 mit der Zurrspannung erfolg genauso wie bei dem unter Fig. 1 beschriebenen Ausführungsbeispiel.

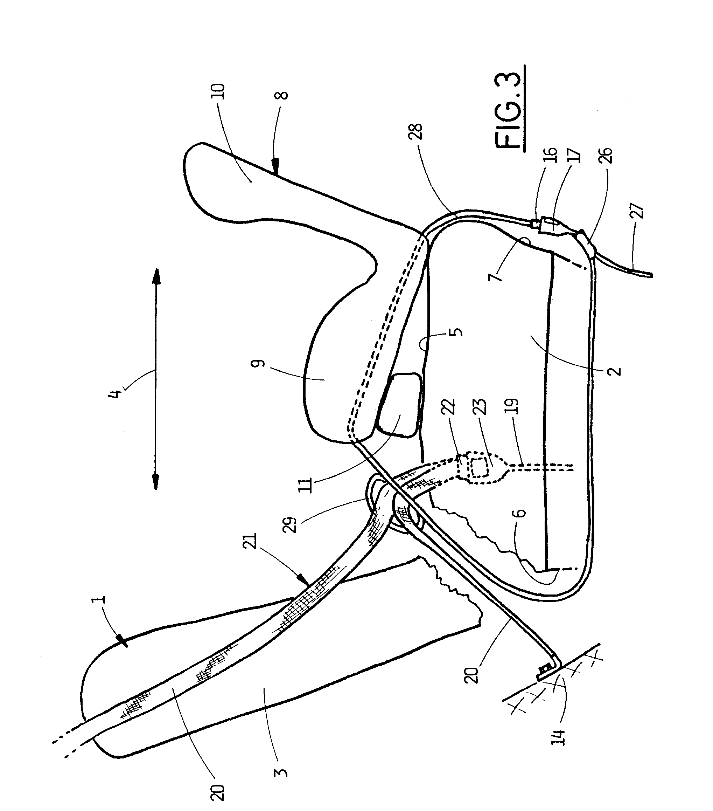

Fig. 3 zeigt eine besondere Ausführungsform des Rückhaltesystems mit einem als Umlaufgurt 28 ausgeführten Zurrgurt. Gegenüber dem Zurrgurt bei den vorhergehenden Ausführungsformen ist der Umlaufgurt ein einstückiger und um den Fahrzeugsitzflächenkörper 2 umlaufender Umlaufgurt 28. Der Umlaufgurt 28 weist im Bereich der Sitzflächenvorderkante 7 eine Schließzunge 16 und eine Gurtschließe 17 auf. Im Anschluß an die Gurtschließe 17 ist die geschilderte Längenverstellung 26 mit dem Spannstropp 27 am Umlaufgurt 28 angebracht. Dem Schließzungen-Gurtschließenpaar etwa gegenüberliegend, in Montageendstellung im Bereich der Fahrzeugsitzrückenlehne 3 positioniert ist auf den Umlaufgurt 28 die Rundschlinge 29 aufgenäht.

Die Wirkungsweise dieser Ausführungsform ist folgende:
Der Umlaufgurt 28, welcher bereits vormontiert im in den Zeichnungen nicht dargestellten Gurtaufnahmekanal sein kann, wird nach dem Stellen des Kindersicherheitssitzes 8 auf die Fahrzeugsitzfläche 5 bei einliegendem Zwischenlegekeil 11 um den Fahrzeugsitzflächenkörper 2 geschlungen. Die Schließzunge 16 ist mit der Gurtschließe 17 verrastet. Der Umlaufgurt 28 wird durch Ziehen am Spannstropp 27 über die Längenverstellung 26 gestrammt.

Der Fahrzeugsicherheitskindersitz 8 ist auf diese Weise auf der Sitzfläche 5 unter Zwischenlage des Zwischenlegekeils 11 vormontiert. Die Aktivierung des Rückhaltesystems erfolgt dadurch, daß der Schulter- und Beckengurt 20 durch die Rundschlinge 29 geführt mit der Schloßzunge 22 im Gurtschloß 23 verrastet ist. Der 3-Punkt-Sicherheitsgurt ist in seiner Montageendstellung derart gestrammt, daß die Zurrspannung den Umlaufgurt 28 über die Rundschlinge 29 beaufschlagt.

Bezugszeichenliste

| 1 | Fahrzeugsitz |
| 2 | Fahrzeugsitzflächenkörper |
| 3 | Fahrzeugsitzrückenlehne |
| 4 | Längsrichtung |
| 5 | Fahrzeugsitzfläche |
| 6 | Sitzflächenhinterkante |
| 7 | Sitzflächenvorderkante |
| 8 | Kinder-Sicherheitssitz |
| 9 | Kindersitzfläche |
| 10 | Kindersitzrückenlehne |
| 11 | Zwischenlegekeil |
| 12 | Zurrgurt |
| 13 | Freiende |
| 14 | Fahrzeugboden |
| 15 | Zurrende |
| 16 | Schließzunge |
| 17 | Gurtschließe |
| 18 | Befestigungslasche |
| 19 | Gurtpeitsche |
| 20 | Schulter- und Beckengurt |
| 21 | 3-Punkt-Sicherheitsgurt |
| 22 | Schloßzunge |
| 23 | Gurtschloß |
| 24 | Obergurt |
| 25 | Untergurt |
| 26 | Längenverstellung |
| 27 | Spannstropp |
| 28 | Umlaufgurt |
| 29 | Rundschlinge |

## Patentansprüche

1. Rückhaltesystem für Kinder-Sicherheitssitze (8) in Kraftfahrzeugen
   - mit einem auf der Fahrzeugsitzfläche (5) eines Fahrzeugsitzes (1) lösbar fixierten Kinder-Sicherheitssitz (8) und
   - einem am Fahrzeug fest montierten 3-Punkt-Sicherheitsgurt (21),
   dadurch gekennzeichnet,
   daß ein mit seinem einen Freiende (13) am Fahrzeug fixierter Zurrgurt (12) die Kindersitzfläche (9) des Kindersicherheitssitzes (8) überspannend mit seinem dem Freiende (13) abgewandten Zurrende (15) mit dem 3-Punkt-Sicherheitsgurt (21) bewegungsmäßig verbunden ist derart, daß der Zurrgurt (12) über den 3-Punkt-Sicherheitsgurt (21) spannbar ist, wobei die Schloßzunge (22) des 3-Punkt-Sicherheitsgurtes (21) mit dem zugehörigen Gurtschloß (23) lösbar verrastet ist und der Kinder-Sicherheitssitz (8) auf dem Fahrzeugsitz (1) verzurrt fixiert ist.

2. Rückhaltesystem nach Anspruch 1, gekennzeichnet durch folgende Merkmale:
   a) Der Zurrgurt (12) verläuft von der Sitzflächenvorderkante (7) bis zu der an die Fahrzeugsitzrückenlehne (3) grenzenden Sitzflächenhinterkante (6).

b) Der Zurrgurt (12) liegt unter Spannung an der Kindersitzfläche (9) an.

c) Der Zurrgurt (8) verzurrt nach Art einer Umschlingung den Kinder-Sicherheitssitz (8) auf die Fahrzeug-Sitzfläche (5) pressend mit dem Fahrzeugsitz (1).

d) Der 3-Punkt-Sicherheitsgurt (21) kreuzt in seiner Verraststellung den Zurrgurt (12) derart, daß der Zurrgurt (12) zwischen dem 3-Punkt-Sicherheitsgurt(21) und der Fahrzeugsitzrückenlehne (3) verläuft.

3. Rückhaltesystem nach Anspruch 2,
      dadurch gekennzeichnet,
   daß in den die Kindersitzfläche (9) an seiner Oberseite tragenden Kindersitzkörper ein den Kindersitzkörper diametral von seiner vorderen Stirnseite bis zu seiner hinteren Stirnseite durchsetzender Gurtaufnahmekanal eingeformt ist.

4. Rückhaltesystem nach Anspruch 3,
      dadurch gekennzeichnet,
   daß der mit seinem Freiende (13) am Fahrzeug fixierte Zurrgurt (12) von der Sitzflächenvorderkante (7) des Fahrzeugsitzes (1) den Kinder-Sicherheitssitz (8) im Gurtaufnahmekanal durchsetzend bis zur Sitzflächenhinterkante (6) verläuft und im Bereich der Sitzflächenhinterkante (6) mit seinem Zurrende (15) fixierbar ist.

5. Rückhaltesystem nach Anspruch 4,
      dadurch gekennzeichnet,
   daß die Kindersitzrückenlehne (10) in der Montageendstellung des Kindersicherheitssitzes (8) der Fahrzeugsitzrückenlehne (3) gegenüberliegt derart, daß der Kinder-Sicherheitssitz (8) entgegen der Fahrtrichtung positioniert ist.

6. Rückhaltesystem nach einem oder mehreren der vorhergehenden Ansprüche,
      gekennzeichnet durch
   einen zwischen der Oberseite der Fahrzeugsitzfläche (5) und der Unterseite der Kindersitzfläche (9) des Kinder-Sicherheitssitzes (8) eingelegten Zwischenlegekeil (11) zur Einstellung der Neigung des Kinder-Sicherheitssitzes (8) gegenüber dem Fahrzeugsitz (1).

7. Rückhaltesystem nach einem oder mehreren der vorhergehenden Ansprüche,
      gekennzeichnet durch
   einen aus einem Obergurt (24) und einem Untergurt (25) gebildeten Zurrgurt derart, daß der Obergurt die die Fahrzeugsitzfläche (5) bildende Oberseite und der Untergurt die der Oberseite abgewandte Unterseite des den horizontalen Teil des Fahrzeugsitzes bildenden Fahrzeugsitzflächenkörpers (2) umschlingt.

8. Rückhaltesystem nach Anspruch 7,
      dadurch gekennzeichnet,
   daß der Obergurt (24) an seinen beiden Freienden (13) Schließzungen (16) aufweist und der Untergurt (25) an seinen beiden Freienden (13) Gurtschließen (17) aufweist, wobei die Schließzungen (16) in die Gurtschließen (17) einrastbar sind.

9. Rückhaltesystem nach Anspruch 8,
      dadurch gekennzeichnet,
   daß das eine Schließzungen-Gurtschließen-Paar die fahrzeugseitige Fixierung und das andere Schließzungen-Gurtschließen-Paar das Zurrende (15) des Zurrgurtes (12) bilden.

10. Rückhaltesystem nach Anspruch 9,
      dadurch gekennzeichnet,
   daß der Untergurt (25) an einem seiner Freienden (13) eine als zusätzliche Zurrung wirksame Längenverstellung (26) aufweist.

11. Rückhaltesystem nach Anspruch 10,
      gekennzeichnet durch
   eine stufenlose, nach Art eines Gurtstrammers wirksame Längenverstellung (26).

12. Rückhaltesystem nach Anspruch 7,
      gekennzeichnet durch
   eine einstückige Ausbildung von Obergurt (24) und Untergurt (25) als Umlaufgurt (28) derart, daß der Umlaufgurt (28) den Fahrzeugsitzflächenkörper (2) umschlingt und durch ein seine Freienden (13,15) lösbar miteinander verbindendes Schließzungen-Gurtschließenpaar vom Fahrzeugsitzflächenkörper (2) demontierbar ist.

13. Rückhaltesystem nach Anspruch 12,
      dadurch gekennzeichnet,
   daß das Schließzungen-Gurtschließen-Paar in der Montageendstellung des Umlaufgurtes (28) im Bereich der Sitzflächenvorderkante (7) des Fahrzeugsitzes (1) positioniert ist.

14. Rückhaltesystem nach einem oder mehreren der vorhergehenden Ansprüche,
      gekennzeichnet durch
   eine vom Zurrgurt (12) getragene und mit dem Zurrgurt (12) fest verbundene, vorzugsweise vernähte Rundschlinge (29), die in der Montageendstellung des Kinder-Sicherheitssitzes (8) vom 3-Punkt-Sicherheitsgurt (21) durchsetzt ist derart, daß sie den 3-Punkt-Sicherheitsgurt (21) umschlingt und das Zurrende (15) des Zurrgurtes (12) bildet.

15. Rückhaltesystem nach Anspruch 14,
dadurch gekennzeichnet,
daß die Zurrspannung vom 3-Punkt-Sicherheitsgurt (21) über die Rundschlinge (29) den Zurrgurt (12) beaufschlagt und der Zurrgurt (12) mittels des 3-Punkt-Sicherheitsgurtes (21) spannbar ist.

16. Rückhaltesystem nach Anspruch 15,
dadurch gekennzeichnet,daß der Zurrgurt (12) als eine Rundschlinge (29) tragender Umlaufgurt (28) ausgebildet ist und im Bereich seines Schließzungen-Gurtschließen-Paares eine als zusätzliche Zurrung wirksame, stufenlose, gurtstrammerartige Längenverstellung (26) aufweist.

17. Rückhaltesystem nach Anspruch 15,
gekennzeichnet durch
einen zweiteiligen Kindersicherheitssitz derart, daß der eine Sitzteil eine Aufnahmevorrichtung für den zweiten, von einer Sitzschale gebildeten Sitzteil ist.

FIG.1

EP 0 479 151 A1

FIG.2

FIG.3

**Europäisches Patentamt**

# EUROPÄISCHER RECHERCHENBERICHT

Nummer der Anmeldung

## EP 91 11 6535

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 197 910   (SLG PRODUKTER) <br> * Seite 3, Zeile 22 - Seite 5, Zeile 9; Abbildungen 1-7 * * <br> – – – | 1,2,6 | B 60 N 2/28 |
| A | US-A-3 404 917   (SMITH) <br> * das ganze Dokument * * <br> – – – | 1 | |
| A | DE-U-8 504 975   (FRANKONIA) <br> – – – – – | | |
| | | | **RECHERCHIERTE SACHGEBIETE (Int. Cl.5)** <br><br> B 60 N <br> B 60 R |

Der vorliegende Recherchenbericht wurde für alle Patentansprüche erstellt

| Recherchenort | Abschlußdatum der Recherche | Prüfer |
|---|---|---|
| Den Haag | 27 Dezember 91 | HORVATH R.C. |